(19) **Europäisches Patentamt European Patent Office Office européen des brevets**

(11) **EP 1 744 471 B1**

(12) **FASCICULE DE BREVET EUROPEEN**

(45) Date de publication et mention
de la délivrance du brevet:
**30.04.2008 Bulletin 2008/18**

(51) Int Cl.:
***H04B 7/155*** *(2006.01)*

(21) Numéro de dépôt: **06116077.6**

(22) Date de dépôt: **26.06.2006**

(54) **Procédé et dispositif de ré-émission isofréquence d'un signal numérique à suppression d'écho**

Verfahren und Vorrichtung zur Gleichfrequenzwiederholungsübertragung von einem digitalen Signal mit Echo-Unterdrückung

Method and apparatus for isofrequency retransmission of a digital signal with echo-suppression

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK RS**

(30) Priorité: **08.09.2005 FR 0509178**
**13.07.2005 FR 0507565**

(43) Date de publication de la demande:
**17.01.2007 Bulletin 2007/03**

(73) Titulaire: **Teamcast**
**35769 Saint-Gregoire Cedex (FR)**

(72) Inventeurs:
• **Spampinato, Eric**
**35520, MONTGERVAL (FR)**
• **Rousset, Olivier**
**35250, SAINT AUBIN D'AUBIGNE (FR)**

(74) Mandataire: **Guéné, Patrick Lucien Juan Joseph**
**Cabinet Vidon**
**Technopôle Atalante**
**16B, rue de Jouanet**
**35703 Rennes Cedex (FR)**

(56) Documents cités:
**EP-A- 1 261 148**

• **SUZUKI H ET AL: "A booster configuration with adaptive reduction of transmitter-receiver antenna coupling for pager systems" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, vol. 3, 19 septembre 1999 (1999-09-19), pages 1516-1520, XP010353231 ISBN: 0-7803-5435-4**

**Description**

**1. Domaine de l'invention**

Le domaine de l'invention est celui de la diffusion d'informations numériques, telle que la radiodiffusion ou la télédiffusion terrestres, nécessitant un déploiement de relais de retransmission dont le rôle est d'assurer une couverture de transmission sur une zone initialement non couverte par l'émetteur principal.

Une application particulière de l'invention est notamment, mais non exclusivement, la Télévision Numérique Terrestre, laquelle préconise un traitement numérique par modulation/démodulation des signaux au niveau des relais de retransmission.

Plus précisément, l'invention se place dans le cadre où le signal reçu par un tel relais doit être réémis sans perturbation dans la même fréquence que le signal source d'origine. On parle alors de retransmetteur isofréquence.

C'est notamment le cas du standard de la Télévision Numérique Terrestre.

**2. Solutions de l'art antérieur**

2.1 Retransmission numérique terrestre

Dans le domaine de la radio et télédiffusion terrestre, il est indispensable d'assurer une continuité de la couverture de transmission sur toute une zone.

La géomorphologie de la zone à couvrir rend les signaux émis par l'émetteur principal sujets à diverses perturbations et atténuations. De plus, en zone urbaine notamment, de tels signaux de Radio ou Télédiffusion subissent de nombreuses réflexions contre les immeubles, le sol et autres obstacles. Ces réflexions nuisent donc à la qualité du signal de réception, en provoquant des atténuations sélectives, encore appelées « fading », et des échos, appelés « échos dus au canal de propagation ».

Ces causes de perturbations, que nous appellerons perturbations dues au canal de transmission, nécessitent un déploiement de relais de retransmission, pour assurer une grande couverture de transmission.

De tels relais sont classiquement appelés des répéteurs ou des "gap-fillers". Leur fonction principale est de recevoir le signal provenant d'un émetteur principal sur une antenne de réception, puis de réémettre ce signal avec un certain gain de puissance vers la zone à couvrir par une antenne d'émission.

Dans le cadre d'une retransmission non isofréquence, certains relais comprennent une unité de traitement numérique, laquelle démodule, décode et corrige les erreurs du signal reçu ayant pour conséquence avantageuse de nettoyer le signal source des perturbations dues au canal de transmission détaillées plus haut, qu'il a pu subir lors de sa propagation incidente. Ces relais possèdent un étage de remodulation pour retransmettre le signal incident à une autre fréquence de canal de transmission.

Classiquement, une telle unité de traitement peut notamment contenir des algorithmes de réception permettant de tenir compte des échos de propagation et du « fading » précédemment décrits, dus au canal de transmission, selon des techniques connues. C'est le cas des nouveaux standards numériques comme le DVB-T ou le DVB-H (de l'anglais "Digital Video Broadcasting-Terrestrial" ou "Digital Video Broadcasting Handheld").

D'autres relais ne font pas cette opération de traitement numérique dit de démodulation et remodulation. Certains d'entre eux fonctionnent également en retransmission isofréquence.

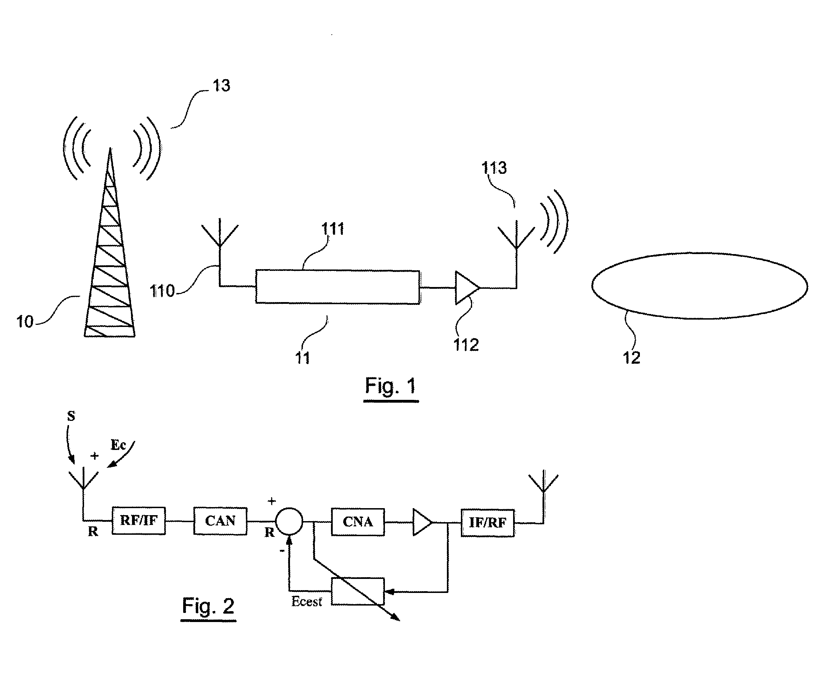

En relation avec la figure 1, de tels répéteurs 11 sont principalement constitués d'une antenne de réception 110 en charge de capter le signal émis 13 par l'émetteur principal 10, d'une unité de traitement 111 de ce signal, d'un amplificateur 112 et enfin d'une antenne d'émission 113 en charge de réémettre un signal 14, correspondant au signal source amplifié et purifié des imperfections causées par le canal de transmission, sur l'ensemble de la zone de couverture 12.

Cependant, la juxtaposition d'une antenne de réception et d'une antenne d'émission sur un même relais crée un phénomène nuisible appelé « couplage ».Il se caractérise par le fait qu'une partie du signal réémis par l'antenne d'émission revient sur l'antenne de réception et est captée par celle-ci. On nomme « Echo de couplage » ce signal reçu à l'antenne de réception provenant de l'antenne d'émission. Cette terminologie d'"écho" s'explique par le fait que dans le domaine de l'analyse temporelle, le signal « parasite » capté par l'antenne de réception correspond au signal source original, retardé du temps de retransmission Td.

L'écho de couplage nuit de manière importante à la réception du signal source à réémettre, il crée ainsi des perturbations s'ajoutant aux perturbations déjà décrites liées au canal de transmission.

En effet, ce signal retardé que constitue l'Echo de couplage est amplifié par la chaîne de transmission du répéteur, ce qui n'est bien évidemment pas souhaitable. Selon le niveau de couplage obtenu lors de l'installation de l'antenne de réception et de l'antenne d'émission, le système peut rentrer en « accrochage », c'est-à-dire généralement en oscillation, l'obligeant à passer en mode « protection », qui a pour conséquence une réduction de la puissance de réémission par diminution du gain de transmission, voire même l'obligeant à cesser d'émettre. Cette réduction de puissance limite la couverture de transmission et implique la mise en place de relais supplémentaires.

2.2 Solutions de l'art antérieur

Classiquement, pour éviter les problèmes d'accrochage précédemment présentés, ainsi que les problèmes de perturbation sur l'antenne de réception par l'antenne d'émission (liés au couplage), bon nombre de répéteurs fonctionnent en recevant sur un canal de fréquence et en réémettant dans un canal différent. Une telle technique évite de plus les zones d'interférence au niveau de la propagation des signaux. Cette technique permet notamment de positionner deux répéteurs dans des zones proches, sur des bandes de fréquence disjointes, évitant ainsi tout risque de perturbations d'un répéteur sur l'autre, même si ces derniers couvrent une zone commune.

A titre d'exemple, les nouvelles technologies mises en oeuvre dans les répéteurs numériques actuels s'appuient sur la puissance des algorithmes de réception des standards de modulation numérique tels que DVB-T, DVB-H. Elles permettent ainsi une génération moderne de répéteurs basés sur la démodulation en numérique du signal reçu, suivie d'une modulation, pour enfin réémettre dans un autre canal. Ces répéteurs numériques à changement de fréquence sont parfois dénommés retransmetteurs.

Cependant, certaines applications peuvent nécessiter de retransmettre à la même fréquence (on parle alors de retransmetteur Isofréquence).

La puissance résiduelle de l'antenne d'émission qui revient sur l'antenne de réception nuit alors à la réception du signal source à retransmettre, puisque les deux signaux sont dans la même bande de fréquence : dans cette configuration particulière « d'isofréquence », le phénomène d'accrochage décrit précédemment peut se produire selon le rapport signal reçu sur signal résiduel.

Pour lutter contre ce phénomène, il existe déjà des systèmes aujourd'hui usités, nommés « systèmes anti-Echo ».

Le document de brevet EP 1 261 148 B1, incorporé ici par référence, expose une implémentation numérique, inspirée d'une telle technique analogique de réémission anti-écho.

Le principe général d'un tel système anti-écho est illustré de manière schématique sur la figure 2.

L'objectif est de synthétiser un signal Ecest, qui correspond à une estimation adaptative de l'Echo de couplage Ec, pour ensuite le soustraire au signal incident R, composé du signal source à réémettre S et de l'écho de couplage Ec.

On note de plus, en relation avec la figure 2, qu'un tel dispositif comprend aussi une unité de transposition du signal d'entrée radiofréquence en bande de processus (RF/IF), ainsi que des unités des conversion analogique/numérique (CAN) et de conversion numérique/analogique (CNA), permettant ainsi un traitement de signaux dans le domaine numérique.

En d'autres termes, tout est basé dans ce dispositif sur une estimation adaptative globale de l'écho de couplage.

**3. Inconvénients de l'art antérieur**

Toutes les techniques d'annulation d'écho de l'art antérieur, conçues et développées pour faire face aux problèmes d'accrochage mentionnés ci-dessus, présentent plusieurs inconvénients présentés ci-après.

En effet, ces différentes techniques anti-écho, tant dans le domaine numérique que dans le domaine analogique, présentent des performances limitées, selon leurs conditions d'implémentation, du fait qu'elles mettent en oeuvre des algorithmes adaptatifs.

En effet, les algorithmes de filtrage adaptatifs tels que le LMS (de l'anglais « Least Mean Square ») sur l'estimation globale d'un écho créent des problèmes bien connus de l'Homme du Métier: ils nécessitent de respecter des critères sévères de convergence, lesquels ne sont pas facilement atteints, ou alors au prix de lourdes ressources de calcul et de mémoire.

Par ailleurs, dans le document de brevet EP 1 261 148 B1 mentionné ci-dessus, l'écho de couplage est estimé de manière directe et globale, ce qui ne permet pas de l'annuler de façon performante. En effet, une telle estimation globale de l'écho de couplage donne des résultats trop peu précis, qui ne peut conduire qu'à une estimation partielle de cet écho.

Une conséquence directe de cet inconvénient est que l'écho de couplage n'est alors jamais entièrement annulé, et un écho résiduel néfaste perturbe et limite par la suite l'ensemble des traitements effectués, et se propage de répéteur en répéteur.

Par ailleurs, l'ensemble des systèmes décrits précédemment est basé sur des techniques dérivées du domaine analogique, lesquelles datent d'une génération antérieure au développement croissant des techniques modernes de radio et télévision numériques. De tels systèmes anti écho actuels ne sont donc qu'une adaptation des techniques antérieures. Ils ne tirent pas profit des avancées technologiques des modulations numériques et ainsi propagent des erreurs de transmission et injectent également leurs propres défauts (bruit de phase des oscillateurs locaux, distorsions de non linéarité, distorsions de linéarité, etc...) liés à l'électronique analogique.

Plus précisément, un inconvénient du "gap-filler" traditionnel est de propager les évanouissements (encore appelés "fading") dus au premier canal de transmission.

Un autre inconvénient du "gap-filler" de l'art antérieur est de propager les dégradations du signal dans la bande : BER>0 et MER<30-32 dB (de l'anglais « Bit Error Rate » et « Modulation Error Ratio »).

Le "gap-filler" de l'art antérieur a encore pour inconvénient de cumuler le bruit de phase de l'émetteur principal avec son propre bruit de phase.

On notera encore que le "gap-filler" de l'art antérieur propage les échos du canal de transmission.

Enfin, les inventeurs ont noté que les systèmes antérieurs présentent l'inconvénient d'avoir des performances limitées du fait que le niveau du signal de l'écho généré par l'antenne d'émission doit rester bien inférieur au signal source (classiquement inférieur à 5 dB). Ces systèmes ne permettent donc pas d'annuler l'écho de couplage, dès lors que sa puissance est trop élevée, ce qui s'avère problématique et limitatif pour les performances de retransmission.

### 4. Objectifs de l'invention

L'invention a notamment pour objectif de pallier ces inconvénients de l'art antérieur.
Notamment, l'invention a pour objectif de proposer une technique de ré-émission isofréquence de signaux, qui permette de garantir de meilleures conditions de performances de retransmission des signaux de télé ou radio diffusion, et d'accroître la zone de couverture, par rapport aux techniques mises en oeuvre dans les répéteurs de l'art antérieur.

Plus précisément, un objectif de l'invention est de fournir une telle technique de ré-émission efficace et performante, qui apporte tous les avantages d'un répéteur numérique à changement de fréquences aux répéteurs Isofréquence de l'art antérieur.

Ainsi, un des objectifs de l'invention est la suppression totale des évanouissements (encore appelés « fading ») définis précédemment, dus au premier canal de transmission, depuis l'émetteur principal jusqu'à l'antenne de réception du réémetteur.

Un autre objectif de la technique de réémission de l'invention est de corriger toutes les erreurs incidentes (BER=0) et de reconstruire un MER aussi, voire plus performant que celui d'un émetteur principal (38 dB).

L'invention a également pour objectif de proposer une telle technique de réémission de signaux qui conserve le gabarit de bruit de phase DVB-T, contrairement aux « gap-fillers » de l'art antérieur, qui ont pour inconvénient de cumuler le bruit de phase de l'émetteur principal avec leur propre bruit de phase. En d'autres termes, l'invention a pour objectif de fournir une telle technique qui permette de concevoir des répéteurs assurant une meilleure couverture à puissance équivalente.

En d'autres termes, alors que les techniques classiques d'annulation d'écho par filtrage adaptatif génèrent un écho résiduel, et se contentent d'atténuer les échos de couplage issus de l'antenne d'émission, l'invention a pour objectif de proposer une telle technique de réémission qui permette de les supprimer intégralement en regénérant des performances conformes aux normes de l'émetteur principal en terme de MER et de bruit de phase.

Notamment, l'invention a pour objectif de fournir une telle technique de réémission qui permette d'annuler l'effet de l'écho de couplage dû à l'antenne d'émission alors même que le niveau de cet écho est proche, voire dans certains cas, supérieur au niveau de réception du signal à transmettre.

L'invention a en outre pour objectif de fournir une telle technique de réémission qui permette de nettoyer intégralement les perturbations liées au canal de transmission dans le signal incident, avant sa réémission.

Un objectif supplémentaire de l'invention est de fournir une technique qui soit compatible avec la plupart des nouveaux standards numériques de radio ou/et télédiffusion tels que :

- ATSC, pour « Advanced Television System Committee » en anglais ;
- ISDBT pour « Integrated Services Digital Broadcasting Terrestrial » en anglais ;
- DAB pour « Digital Audio Broadcasting » en anglais;
- T-DMB pour « Terrestrial - Digital Media Broadcasting » en anglais ;
- DVB-T et DVB-H pour « Digital Video Broadcasting Terrestrial » et « Digital Video Broadcasting Handheld » en anglais etc.

Aussi, un objectif de l'invention est de proposer de tels dispositifs de réémission qui puissent être mis en cascade à l'infini, ce qui n'est pas possible avec les "gap-fillers" de l'art antérieur dont les imperfections limitent, voire empêchent les mises en cascade.

### 5. Exposé de l'invention

Ces objectifs, ainsi que d'autres qui apparaîtront par la suite, sont atteints à l'aide d'un procédé de ré-émission isofréquence d'au moins un signal numérique comprenant une étape de réception dudit signal sur une antenne de réception et une étape de ré-émission dudit signal reçu sur une antenne d'émission, un couplage prenant naissance entre lesdites antennes d'émission et de réception.

Selon l'invention, un tel procédé de ré-émission isofréquence comprend également les étapes suivantes :

- extraction d'au moins un écho de couplage dudit signal reçu ;
- traitement dudit écho de couplage, de façon à générer au moins un signal de correction ;
- soustraction dudit signal de correction audit signal reçu, délivrant un signal amélioré ;
- régénération dudit signal amélioré par démodulation/remodulation,
  de façon à ré-émettre sur ladite antenne d'émission ledit signal amélioré régénéré.

Ainsi, l'invention repose sur une approche tout à fait nouvelle et inventive de la ré-émission isofréquence d'un signal dans le domaine de la radio ou télédiffusion terrestre. En effet, l'invention propose une nouvelle technique, destinée à être implantée dans les répéteurs de signaux numériques, qui combine les avantages des répéteurs numériques à changement de fréquence et des répéteurs analogiques isofréquences de l'art antérieur.

Plus précisément, la technique de l'invention propose d'éliminer le signal de couplage néfaste, en soustrayant au signal reçu un signal de correction, obtenu à partir de ce signal de couplage.

L'invention repose ainsi sur une annulation d'un écho de couplage qui va être généré lors de la ré-émission du signal, et consiste en une re-génération numérique complète du signal, après traitement. Elle permet ainsi d'annuler, non seulement les échos de couplage apparaissant entre l'antenne d'émission et l'antenne de réception, mais aussi les échos dus au canal de propagation situé en amont de l'antenne de réception ainsi que les autres imperfections telles que le bruit de phase et le "fading".

Ce procédé est mis en oeuvre dans différents produits de retransmission, il est connu sous le nom « RAZE » pour Réémetteur A Zéro Echo.

Avantageusement, ladite étape d'extraction dudit écho de couplage met en oeuvre une détermination d'au moins un paramètre de déformation dudit signal à ré-émettre sur ladite antenne d'émission, dû audit couplage.

En d'autres termes, la technique de l'invention permet de déterminer de manière précise et indépendante chaque paramètre de déformation de l'écho de couplage, pour obtenir une très bonne estimation de ce dernier.

De manière avantageuse, ledit signal de correction de l'invention est obtenu par déformation adaptative, tenant compte dudit au moins un paramètre de déformation, dudit signal à ré-émettre sur ladite antenne d'émission.

On obtient ainsi un signal de correction très proche de l'écho de couplage réel, permettant ainsi d'annuler complètement ce dernier.

Selon l'invention, ledit paramètre de déformation de la technique de l'invention appartient au groupe comprenant:

- un gain ;
- un délai ;
- une phase ;
- un temps de groupe.

En effet, l'echo de couplage se caractérise par plusieurs paramètres de déformation, par rapport au signal à ré-émettre, qu'on détermine un à un : un gain, un délai, une phase et un temps de groupe.

Dans un mode de réalisation particulier de l'invention, ladite déformation adaptative dudit signal à ré-émettre comprend les étapes de :

- application d'un délai fixe correspondant à une durée d'une sous-étape de traitement dudit signal de ladite étape de régénération, audit signal à ré-émettre, délivrant un signal retardé ;
- filtrage adaptatif dudit signal retardé tenant compte desdits paramètres de déformation de gain et de phase, de façon à générer ledit signal de correction.

En d'autres termes, le signal de correction est obtenu en deux temps : en appliquant un délai au signal à réémettre d'une part, et en filtrant de manière adaptative le signal obtenu retardé. Cette décomposition en deux phases de la détermination du signal de correction permet une annulation totale de l'écho de couplage.

Dans ce même mode de réalisation particulier de l'invention, ladite déformation adaptative dudit signal à ré-émettre introduit également un délai variable dans ledit signal et ledit filtrage adaptatif met en oeuvre une multiplication complexe de correction desdits paramètres de déformation de gain et de phase.

Plus précisément, on introduit un délai supplémentaire, représentant le délai dû au couplage des antennes, et une multiplication complexe est utilisée pour corriger la phase et le gain.

Dans un mode de réalisation particulier de l'invention, ladite extraction dudit au moins un écho de couplage met en oeuvre au moins un algorithme numérique appartenant au groupe comprenant :

- un algorithme de corrélation ;
- un algorithme de réduction d'erreur de type LMS.

Ainsi, de manière avantageuse, les algorithmes de filtrage adaptatifs mis en oeuvre dans l'étape de déformation adaptative de l'invention sont basés sur des méthodes de corrélation ou de réduction d'erreur tels que le LMS (Least Mean Square en Anglais).

Avantageusement, le procédé de l'invention comprend également une étape d'amplification dudit signal à ré-émettre.

Une telle étape permet de compenser les pertes de puissances éventuelles lors des propagations précédentes du signal à réémettre.

L'invention concerne de plus un dispositif de ré-émission isofréquence d'au moins un signal numérique comprenant des moyens de réception d'un signal source sur une antenne de réception, et des moyens de ré-émission dudit signal source par une antenne d'émission, un couplage prenant naissance entre lesdites antennes d'émission et de réception, de sorte qu'au moins un écho de couplage issu de ladite antenne d'émission est reçu avec ledit signal source sur ladite antenne de réception. Selon l'invention, un tel dispositif comprend :

- des moyens d'extraction d'au moins un écho de couplage dudit signal source;
- des moyens de traitement dudit au moins un écho de couplage, délivrant au moins un signal de correction ;
- des moyens de soustraction dudit signal de correction audit signal source, délivrant un signal amélioré ;
- des moyens de regénération dudit signal amélioré par démodulation/remodulation,
  de façon à ré-émettre sur ladite antenne d'émission ledit signal amélioré regénéré.

L'invention concerne également un produit programme d'ordinateur téléchargeable depuis un réseau de communication et/ou stocké sur un support lisible par ordinateur et/ou exécutable par un microprocesseur, comprenant des instructions de code de programme pour la mise en oeuvre du procédé de réémission isofréquence tel que décrit précédemment.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1, déjà présentée en relation avec l'art antérieur, illustre un dispositif de transmission d'informations en radiodiffusion ; la figure 2, également présentée en relation avec l'art antérieur, illustre de manière schématique un répéteur isofréquence de l'art antérieur ;
- la figure 3 présente schématiquement le synoptique de l'invention ;
- les figures 4A et 4B illustrent un réémetteur de l'invention dans lequel une variante a été apportée sur la voie de retour par rapport au réémetteur de la figure 3 ;
- la figure 5 décrit une autre variante de réalisation du synoptique de la figure 3 qui en diffère par le mode de correction du signal réémis ;
- les figures 6A et 6B décrivent d'autres variantes de réalisation d'un réémetteur dans lesquelles l'extraction d'écho est réalisée différemment ;
- la figure 7 schématise un mode de réalisation particulier de l'invention.
- les figures 8A et 8B sont des diagrammes représentant le rapport porteuse sur bruit C/N respectivement en conditions non bruitées et en conditions bruitées.

### 7. Description d'un mode de réalisation de l'invention

7.1 Principe général

Le principe général de l'invention repose sur l'extraction précise d'un écho de couplage, au niveau de l'antenne d'émission d'un répéteur isofréquence, qui permet de générer un signal de correction à soustraire au signal reçu sur l'antenne de réception, de façon à corriger les déformations liées au couplage que va subir ce signal après réémission.

On note que dans le domaine technique de la radiodiffusion ou la télédiffusion, l'Homme du Métier entend par le terme réémission le processus de démodulation du signal source suivie du processus de remodulation.

Aussi, la modulation d'un signal présente la caractéristique particulière de décorréler ce signal avec lui-même lorsque celui-ci est décalé d'un délai de durée T.

De manière classique, le processus de démodulation/remodulation du signal reçu consiste à le démoduler, à le traiter avec des algorithmes sophistiqués dont le rôle est de corriger le signal source des erreurs causées par le canal de transmission, par des procédés de correction numérique notamment, puis à le remoduler afin de générer un signal «propre» reconstitué et non entaché d'erreurs. De telles erreurs sont dues aux réflexions des signaux, aux interférences de propagation, au bruit de phase des oscillateurs, etc.

Ces opérations sont effectuées par un module appelé Régénérateur Numérique.

Dans le contexte de l'invention, un retransmetteur numérique reçoit sur son antenne d'émission un signal incident que l'on décompose en deux parties :

- le signal source que l'on souhaite moduler-démoduler avec un regénérateur numérique tel que défini, pour ensuite être réémis;
- une partie du signal réémis par l'antenne d'émission. Ce signal, qui n'est en réalité qu'un écho retardé d'un délai correspondant au temps de traitement de l'ensemble de la chaîne, est déformé en raison des caractéristiques de couplage des deux antennes d'émission et de réception. Un tel signal est appelé écho de couplage. Sa puissance est généralement inférieure à celle du signal source.

Le principe général du retransmetteur isofréquence est alors d'éliminer l'écho de couplage en soustrayant au signal source un signal appelé signal de correction.

Selon l'invention, ce signal de correction, qui correspond à une estimation de l'écho de couplage, est synthétisé à partir d'une détermination judicieuse et précise des paramètres de déformation du signal à réémettre, dus au couplage. Ces paramètres, que nous appellerons par la suite paramètres de déformation, peuvent être : un gain, un délai, une phase, un temps de groupe, etc.

Le signal de correction est donc obtenu en « déformant » le signal à ré-émettre par l'application des paramètres de déformation estimés, qui correspondent aux caractéristiques du couplage d'antennes.

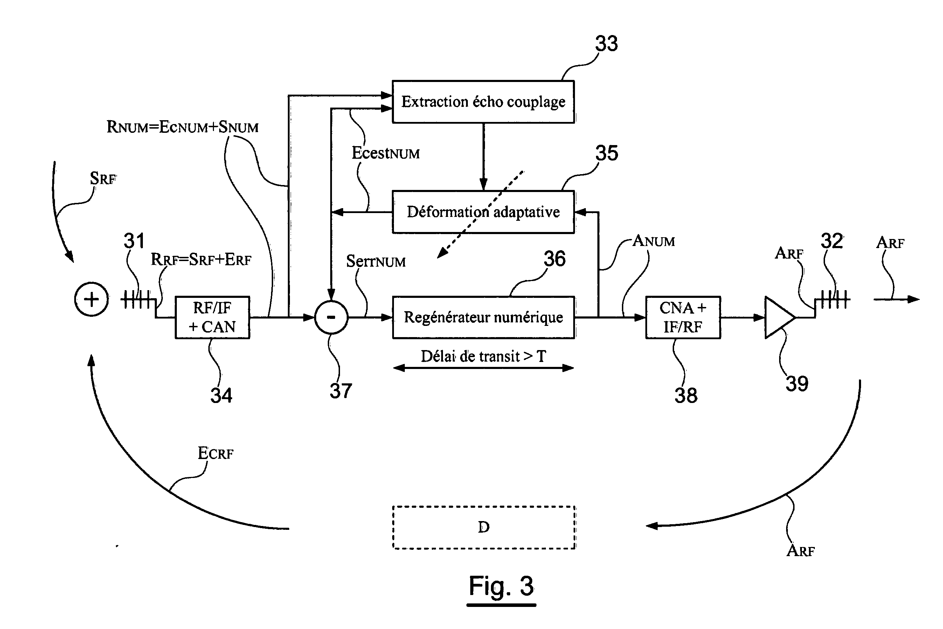

La figure 3 illustre l'ensemble des signaux mis en jeu et les entités traitantes dans un retransmetteur numérique isofréquence selon le principe général de l'invention.

L'antenne de réception 31 reçoit un signal source $S_{RF}$ émis par un émetteur principal, ou par un retransmetteur précédent dans le cas d'une configuration en cascade. A ce signal $S_{RF}$ s'ajoute un signal $Ec_{RF}$ qui est l'écho de couplage, et correspond à une portion du signal $A_{RF}$ à ré-émettre par l'antenne 32. Le signal $A_{RF}$ est la conversion en un signal analogique (CNA) et radiofréquence (IF/RF) du signal $A_{NUM}$ numérique à ré-émettre, par le bloc 38.

La somme des signaux $Ec_{RF}$ et $S_{RF}$ forme un signal total radiofréquence analogique $R_{RF} = Ec_{RF} + S_{RF}$ incident sur l'antenne 31 de réception, lequel est ensuite transposé dans une bande de fréquence intermédiaire IF et numérisé (CAN) par un module 34. Il résulte en sortie du module 34 un signal numérique $R_{NUM} = Ec_{NUM} + S_{NUM}$. $Ec_{NUM}$ et $S_{NUM}$ correspondant respectivement à l'écho de couplage $Ec_{RF}$ numérisé et au signal source $S_{RF}$ numérisé.

On note que le signal $Ec_{RF}$ est sensiblement le même que le signal à ré-émettre $A_{RF}$, à ceci près qu'il a subi des déformations dues au couplage de l'antenne, lesquelles sont symbolisées par un bloc D, incluant les paramètres de déformation réels et généralement inconnus tels que le délai, le gain (ou l'atténuation), la phase et le temps de groupe.

L'objectif principal atteint par l'invention est donc une détermination précise de ces paramètres de déformation.

Le récepteur de l'invention comprend pour cela un module 33, que nous appellerons par la suite module d'Extraction de l'Echo de Couplage, qui recherche les déformations précédemment citées, à partir d'algorithmes numériques tels que la corrélation ou la réduction de l'erreur de type LMS (Least Mean Square en anglais). On note que ces algorithmes adaptatifs agissent directement et indépendamment sur des paramètres particuliers, et non sur un signal d'erreur dans sa globalité, comme c'est classiquement le cas dans les techniques de l'art antérieur.

Une fois déterminés, les paramètres de déformations sont intégrés dans un module 35 de Déformation Adaptative, dont le rôle est d'appliquer les paramètres de déformation au signal $A_{NUM}$ à ré-émettre (donc non déformé par le couplage), de manière à resynthétiser l'écho de couplage $Ec_{NUM}$.

Ce module 35 de déformation adaptative reçoit en entrée le signal $A_{NUM}$ numérique à ré-émettre, et génère en sortie le signal $Ecest_{NUM}$ de correction numérique.

En d'autres termes, le module 35 « déforme » de manière adaptative le signal à ré-émettre $A_{NUM}$ pour reconstituer de manière fidèle l'Echo de couplage numérique $Ec_{NUM}$.

Plus précisément, la déformation adaptative s'exécute en deux temps.

Elle est tout d'abord constituée d'un délai fixe, lequel est réalisé en numérique par une mémoire. Ce délai correspond aux temps de traitement des étages d'entrée et sortie des modules 34 et 38.

La déformation à apporter ensuite au signal $A_{NUM}$ à ré-émettre correspond aux caractéristiques de couplage en elles-mêmes : délai (de couplage entre les deux antennes), phase et gain. Elle est par exemple réalisée par un filtre adaptatif.

Le signal $Ecest_{NUM}$ obtenu est un signal de correction qui est soustrait 37 au signal $R_{NUM}$ reçu, signal numérique contenant le signal source $S_{NUM}$ et l'écho de couplage $Ec_{NUM}$.

Le signal obtenu $Serr_{NUM}$ correspond au signal reçu $R_{NUM}$ duquel a été extrait le signal de correction: $Serr_{NUM}$ = $R_{NUM}$-$Ecest_{NUM}$

Il est ré-injécté dans le module 36 de Régénération Numérique.

On note que dans la configuration de la figure 3, le module 33 d'extraction de l'écho de couplage récupère le signal $R_{NUM}$ reçu par l'antenne de réception 31, lequel a auparavant été transposé en bande de base (RF/IF) et numérisé (CAN) par une unité 34. En effet, dans cette configuration particulière, les algorithmes mis en oeuvre pour l'extraction de l'écho de couplage nécessitent en entrée le signal $R_{NUM}$ reçu ainsi que le signal $Ecest_{NUM}$ estimé d'écho de couplage qui vont permettre aux algorithmes de s'adapter rapidement pour estimer les paramètres de déformation.

Différentes variantes de réalisation de l'invention peuvent être également envisagées.

7.2 <u>Variantes sur l'entrée du module de déformation adaptative</u>

En relation avec la figure 3 précédemment détaillée, on rappelle que le signal $A_{NUM}$ d'entrée du module de déformation adaptative est le signal à ré-émettre numérisé. Celui-ci est injecté dans le module 35 de déformation adaptative avant d'être converti en un signal $A_{RF}$ analogique (CNA) radiofréquence (IF/RF) par l'unité 38.

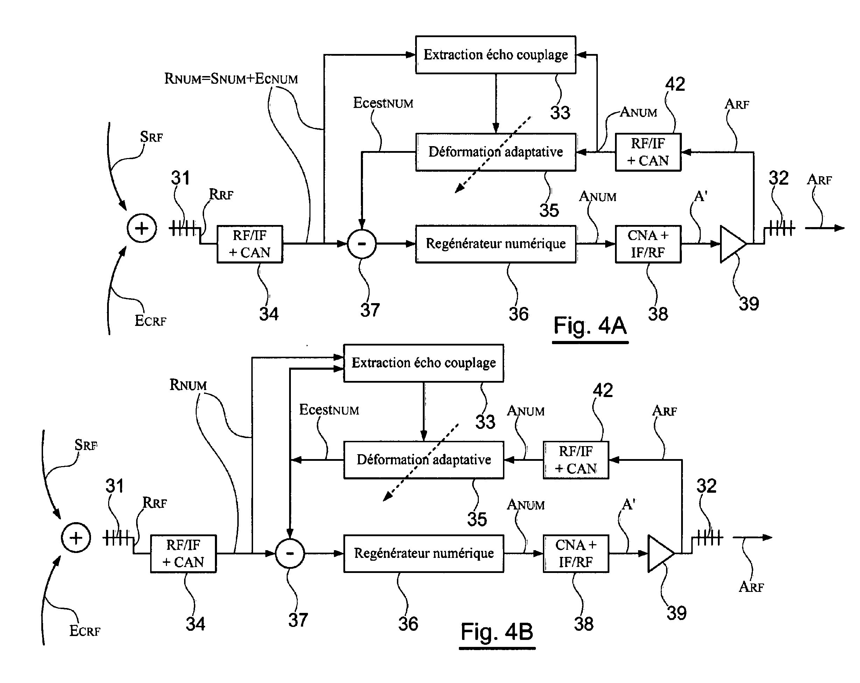

Une première variante (figures 4A et 4B) consiste à injecter dans le module 35 de déformation adaptative le signal $A_{RF}$ à ré-émettre, seulement après les étapes de conversion 38 de ce signal $A_{NUM}$ en un signal A' analogique et sa transposition 38 en radiofréquences, et après une étape d'amplification par l'amplificateur 39 du signal A' à ré-émettre, créant ainsi le signal $A_{RF}$.

De ce fait, le signal $Ecest_{NUM}$ de correction à soustraire est plus proche de l'écho de couplage $Ec_{NUM}$ car il tient compte de la chaîne 34 et 38 Radiofréquece (RF), ainsi que des caractéristiques de l'amplificateur 39.

Du fait que les algorithmes mis en oeuvre dans le module 35 de déformation adaptative traitent des signaux exclusivement numériques, on note que cette solution nécessite un passage 42 de la bande radiofréquences en fréquences intermédiaires (RF/IF) et une Conversion 42 Analogique Numérique (CAN) supplémentaires et de bonne qualité.

On note que les dispositifs des figures 4A et 4B se différencient par les signaux d'entrée du module 33 d'extraction de l'écho de couplage. Le dispositif de la figure 4A traite le signal $R_{NUM}$ reçu numérisé ainsi que le signal $A_{NUM}$ numérisé à ré-émettre. Ceci confère aux algorithmes mis en oeuvre par le module 33 de bonnes performances, nécessitant les ressources conséquentes, en termes de puissance de calcul.

En relation avec la figure 4B, une variante permet au module 33 de traiter le signal $R_{NUM}$ numérisé reçu ainsi que le signal $Ecest_{NUM}$ de correction. Une telle technique nécessite alors des ressources moindres en termes de puissance de calcul. En d'autres termes, l'algorithme mis en oeuvre dans le dispositif de la figure 4B nécessite des ressources moindres, aux prix de performances plus faibles.

7.3 <u>Variante sur la soustraction du signal de correction:</u>

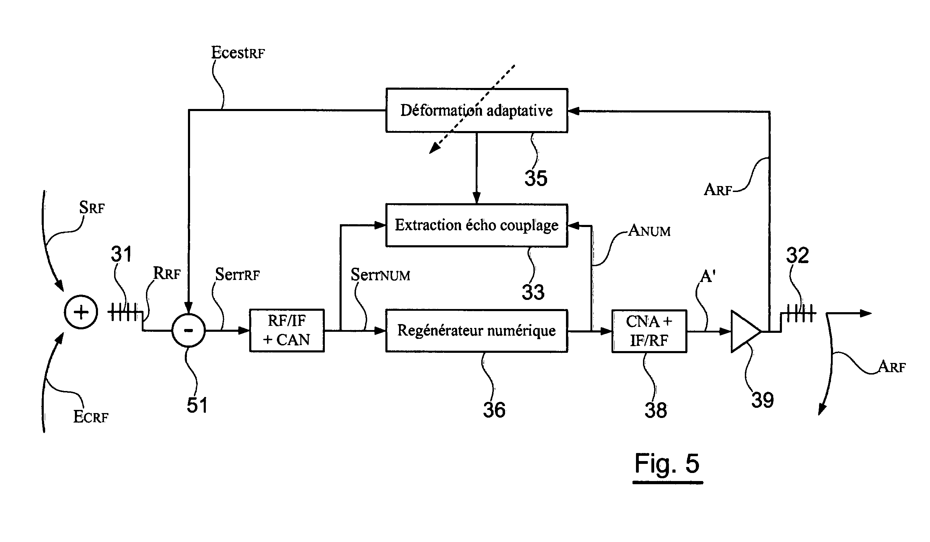

On peut envisager une variante (figure 5), dans laquelle le passage 42 RF/IF et la Conversion 42 Analogique Numérique CAN supplémentaires précédemment cités en relation avec les figures 4A et 4B ne sont plus nécessaires.

Pour cela, la déformation adaptative 35 du signal $A_{RF}$ à ré-émettre est réalisée entièrement dans le domaine analogique et en Radiofréquence (RF). Le module 35 de Déformation Adaptative reçoit alors en entrée le signal $A_{RF}$ qui correspond au signal à ré-émettre, analogique et dans la bande des radiofréquences (RF). Il génère en sortie un signal $Ecest_{RF}$ de correction, lui aussi analogique et dans la bande des radiofréquences (RF), qui est alors soustrait 51 au signal $R_{RF}$ incident directement au niveau de l'antenne de réception 31, dans le domaine analogique et radiofréquence (RF).

On obtient alors le signal $Serr_{RF}$ radiofréquence équivalent à :

$$Serr_{RF} = R_{RF}\text{-}Ecest_{RF}$$

On est ainsi plus proche de la réalité par rapport à une déformation numérique en bande de base.

7.4 <u>Variantes sur l'extraction de l'écho :</u>

On rappelle que, selon l'invention, la détermination des paramètres de déformation, dans le module 33 d'extraction de couplage, est basée sur des algorithmes adaptatifs. Dans l'implémentation de la figure 3, ces algorithmes de traitement ont besoin en entrée du signal $R_{NUM}$ reçu, comprenant le signal $S_{NUM}$ source et l'Echo de couplage $Ec_{NUM}$, ainsi que du signal $Ecest_{NUM}$ de correction correspondant au signal $A_{NUM}$ à ré-émettre déformé.

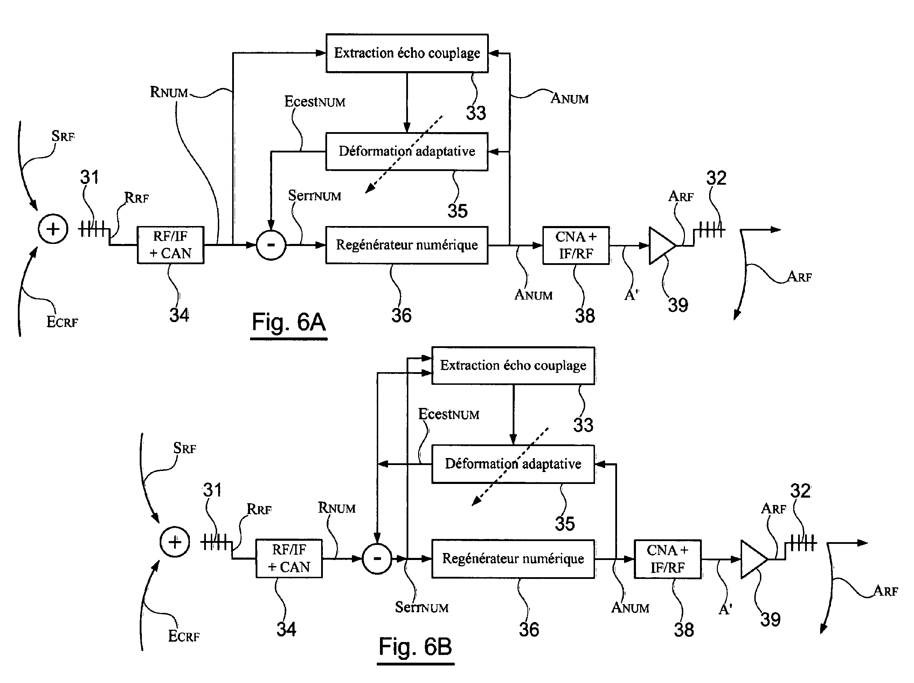

Cependant, il est possible d'implémenter d'autres variantes (figures 6A et 6B) sur ces algorithmes qui fonctionnent en prenant les signaux de comparaisons à d'autres emplacements de la chaîne de traitement du répéteur.

En relation avec la figure 6A, le signal de correction $Ecest_{NUM}$ en entrée du module 33 d'extraction de l'écho de couplage peut notamment être remplacé par le signal $A_{NUM}$ à ré-émettre, numérisé.

Enfin, en relation avec la figure 6B, certains algorithmes adaptatifs peuvent traiter des signaux de comparaison en entrée qui seront le signal $Ecest_{NUM}$ de correction d'une part, et le signal $Serr_{NUM}$ à ré-émettre d'autre part, avant que celui-ci ne soit traité par le Régénérateur 36 Numérique pour obtenir le signal $A_{NUM}$ numérique propre à ré-émettre.

7.5. Description d'une implémentation particulière

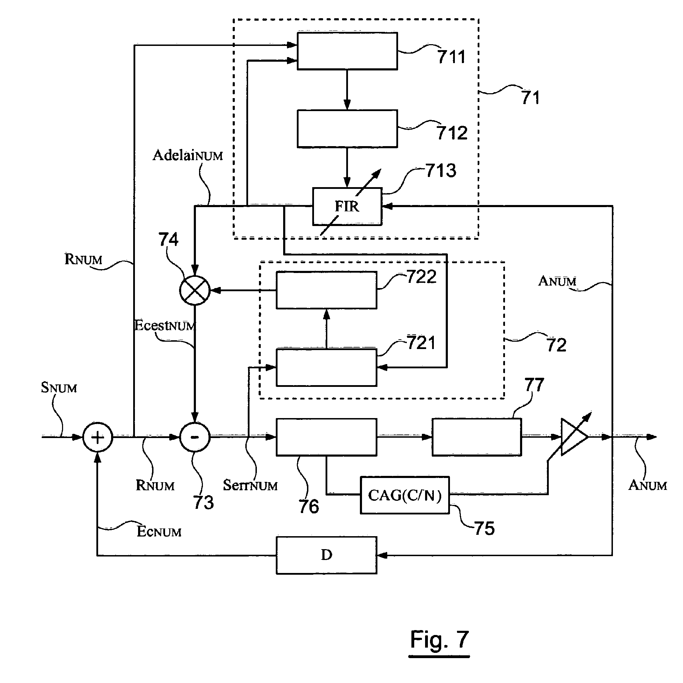

On décrit maintenant, en relation avec la figure 7, le détail des algorithmes mis en oeuvre dans le procédé de l'invention.

Le procédé « zéro écho » de l'invention peut s'appliquer à des signaux numériques, qui sont démodulés puis re-modulés par un module déjà décrit précédemment, appelé régénérateur numérique.

L'invention corrige les effets du couplage entre les antennes de réception et d'émission en traitant le signal de manière à en extraire le couplage.

On rappelle par ailleurs que le couplage se caractérise par un retard, une atténuation et un déphasage entre le signal reçu sur l'antenne de réception du réémetteur et le signal ré-émis par l'antenne d'émission. Une fois le couplage identifié, il est retranché au signal d'entrée.

Pour plus de clarté, les différents signaux mis en jeu sont annotés de manière similaire à ceux décrits dans les figures précédentes 3 à 6.

De plus, les traitements algorithmiques détaillés dans cette partie sont réalisés sur des signaux radiofréquences déjà translatés dans une bande de fréquence intermédiaire et numérisés. On ne représente donc pas sur la figure 7 les unités de transformation radiofréquence (RF/IF) ainsi que celles de Conversions Analogique vers Numérique (CAN) et réciproquement (CNA).

En relation avec la figure 7, les signaux mis en jeu sont exprimés mathématiquement :

$$R_{NUM}(t) = S_{NUM}(t) + K \times A_{NUM}(t\text{-}\tau) = S_{NUM}(t) + Ec_{NUM} \; ;$$

$$Serr_{NUM}(t) = R_{NUM}(t) - \bar{E}cest_{NUM}(t) \; ;$$

$$Y2(t) = K' \times Adelai_{\overline{NUM}}(t) \; ;$$

$$Adelai_{NUM}(t) = A_{NUM}(t\text{-}\tau') \; ;$$

$$Serr_{NUM}(t) = S_{NUM}(t) + K \times A_{NUM}(t\text{-}\bar{\tau}) = K' \times A_{NUM}(t\text{-}\bar{\tau}').$$

Avec :

$$K = k \, e^{j*\sigma} \; ;$$

$$K' = k' \, e^{j*\sigma} \; ;$$

$\tau$ : Délai apporté par le couplage d'antennes et toute la chaîne de transposition analogique ;

k : Gain de couplage d'antenne ;

$\sigma$ : Déphasage du signal apporté par le couplage d'antennes et la chaîne de transposition analogique ;

$\tau'$ : Estimation du délai ;

k' : Estimation du gain de couplage ;

σ': Estimation du déphasage de couplage ;

L'algorithme s'effectue alors en deux temps.

On cherche dans un premier temps à synchroniser le signal $R_{NUM}$ d'entrée, reçu par l'intermédiaire de l'antenne de réception et le signal $A_{NUM}$ de sortie ré-émis par l'antenne d'émission, de manière à annuler le retard entre ces derniers. Cette opération est effectuée par le module 71 de traitement du retard.

Une fois que le retard est nul ou quasi nul, l'unité 72 de Traitement de la phase et du gain va déclencher l'algorithme permettant d'estimer l'atténuation et le déphasage du couplage, de manière à créer un signal de correction $Ecest_{NUM}$, et à retrancher 73 ce dernier au signal d'entrée $R_{NUM}$.

Dans les domaines auxquels l'invention s'applique, les caractéristiques de couplage sont fixes ou varient très lentement dans le temps, ce qui permet donc l'enchaînement des deux asservissements décrits.

On présente maintenant en détail les deux étapes réalisées successivement par les modules 71 de traitement du retard et 72 de Traitement de la phase et du gain.

Algorithme 1 : Correction du délai :

La mesure du délai s'effectue entre le signal $R_{NUM}$ reçu sur l'antenne de réception puis numérisé, et le signal numérisé $A_{NUM}$ de sortie retardé, appelé $Adelai_{NUM}$. Pour réaliser cette mesure, on effectue 711 un produit de corrélation entre ces deux signaux. La position du pic de corrélation permet de déterminer le délai entre le signal $Adelai_{NUM}$ et l'écho de couplage $Ec_{NUM} = K \times A_{NUM}(t-\tau)$ :

$$\mathrm{Erreur}(\tau') = \mathrm{Max}(\,\mathrm{Corr}_n(\,R_{NUM}(t),\,Adelai_{NUM}\,(t\text{-}n)\,)\,).$$

Avec :

$Adelai_{NUM}\,(t) = A_{NUM}(t\text{-}\tau').$
$R_{NUM}(t) = S_{NUM}(t) + K \times A_{NUM}(t\text{-}\tau).$
n variant de +/- 10$\mu$s.
$Corr_n$: fonction de corrélation.

La partie entière du délai est déterminée par l'unité 712 grâce à une ligne à retard. La partie fractionnaire est quant à elle déterminée grâce à un filtre 713 à réponse impulsionnelle finie (FIR) interpolateur d'ordre 1 à polynômes de Lagrange. La mesure et la correction du délai s'effectuent de manière adaptative. L'objectif de l'algorithme est de faire tendre Erreur($\tau'$) vers 0.

$$\tau'\,(n) = \tau'\,(n\text{-}1) - G1 \times \mathrm{Erreur}(\tau')\,(n)$$

Avec :

G1 : gain de l'algorithme d'adaptation
Erreur($\tau'$) : Erreur de délai estimé par la corrélation entre $Adelai_{NUM}$ et

$$K \times A_{NUM}(t\text{-}\tau).$$

Les mesures réalisées démontrent que l'estimation de Erreur($\tau'$) reste fiable même avec un signal $(S_{NUM})_{dB} > (A_{NUM})_{dB} - 30dB$

Algorithme 2 : Correction de l'amplitude et de la phase

La mesure et la correction de l'amplitude et de la phase commencent lorsque le délai devient nul ou quasi nul, c'est-à-dire lorsque la valeur d'adaptation du délai est devenue stable.

La mesure 722 s'effectue entre le signal de sortie retardé $Adelai_{NUM}$ et le signal d'entrée corrigé $Serr_{NUM}$. On effectue un produit 721 de corrélation entre ces deux signaux divisé par l'autocorrélation de $Adelai_{NUM}$.

On exprime sous forme vectorielle le signal $S_{NUM}$ source reçu ainsi que le signal $A_{NUM}$ réémis :

$$S_{NUM} = [C_1 e^{jD1}, C_2 e^{jD2}, \ldots, C_n e^{jDn}];$$

$$A_{NUM} = [A_1 e^{jB1}, A_2 e^{jB2}, \ldots, A_n e^{jBn}];$$

n est la taille de la fenêtre de corrélation.

Le couplage K de l'antenne est exprimé en faisant apparaître la phase et le gain de couplage :

$$K = k \, e^{jb} \, ;$$

Il s'en suit :

$$Serr_{NUM}(t) = S_{NUM}(t) + K \bar{x} A_{NUM}(t\text{-}\tau) - K' \bar{x} Adelai_{NUM} = S_{NUM}(t) + K \bar{x} A_{NUM}(t\text{-}\tau) - \bar{K}' \bar{x} A_{NUM}(t\text{-}\tau').$$

Si $\tau = \tau'$, alors :

$$Serr_{NUM} = S_{NUM} + (K\text{-}K') \bar{x} Adelai_{NUM}.$$

$$Serr_{NUM} = [C_1 e^{jD1} + (K\text{-}K') A_1 e^{jB1}, C_2 e^{jD2} + (K\text{-}K') A_2 e^{jB2}, \ldots, C_n e^{jDn} + (K\text{-}K') A_n e^{jBn}]$$

- <u>Autocorrélation :</u>

$$AutoCorr(Adelai_{NUM}) = \sum_{(i=1 \text{ à } n)} A_i^2 \qquad (1)$$

- <u>Corrélation :</u>

$$Corr(Serr_{NUM}, Adelai_{NUM}) = Serr_{NUM} \, x \, Adelai_{NUM}^{\,T}$$

$$Corr(Serr_{NUM}, Adelai_{NUM}) = (K\text{-}K') x (\sum_{(i=1 \text{ à } n)} A_i^2) + S_{NUM} \, \bar{x} \, Adelai_{NUM}^{\,T}$$

Or $S_{NUM} \, x \, Adelai_{NUM}^{\,T} = 0$ car on traite des signaux modulés (par exemple par OFDM de l'anglais « Orthogonal Frequency Division Multiplexing »), et on sait qu'un tel signal présente la caractéristique d'être décorrélé avec lui-même décalé dans le temps.

$$R_{NUM}A_{NUM}corr = (K\text{-}K') \, x \, (\sum_{(i=1 \text{ à } n)} A_i^2) \qquad (2)$$

- <u>Résultat :</u>

$$R_{\overline{NUM}}S_{\overline{NUM}}corr / S_{\overline{NUM}}autocorr = (K-K') \times (\sum_{(i=1\,à\,n)}A_i^2) / \sum_{(i=1\,à\,n)} A_i^2$$

$$R_{NUM}S_{NUM}corr / S_{NUM}autocorr = (K-K') = Erreur(K')$$

La correction du signal $A_{NUM}$ par l'amplitude et la phase se fait par une multiplication 74 complexe de Adelai$_{NUM}$ avec K'. K' est obtenue par un simple algorithme d'asservissement ayant pour objectif de faire tendre Erreur (K') vers 0.

$$K'(n) = K'(n-1) - G2 \times Erreur(K')(n)$$

Avec : G2 : gain de l'algorithme d'adaptation

Enfm, le signal Serr$_{NUM}$ est alors réinjecté dans le démodulateur 76, pour ensuite être remodulé par le modulateur 77.

**Performances :**

Pour un signal DVB-T, les performances de démodulation sont très liées au rapport porteuse sur bruit C/N du signal reçu.

Selon l'état de l'art des récepteurs, il faut un bruit gaussien maximum pour une réception permettant une qualité de service acceptable dans le monde de la diffusion.

Le tableau ci-après donne une indication du rapport porteuse sur bruit C/N maximal pour les modes DVB-T les plus connus et utilisés afin d'obtenir moins d'une erreur toutes les heures.

| Modulation | Taux de protection | C/N (canal Gaussien) |
|---|---|---|
| QPSK | ½ | 5 dB |
| QPSK | 2/3 | 7 dB |
| 16 QAM | ½ | 10 dB |
| 16 QAM | 2/3 | 13 dB |
| 64 QAM | ½ | 16 dB |
| 64 QAM | 2/3 | 18 dB |
| 64 QAM | 3/4 | 20 dB |

Pour que le système fonctionne dans les modes les plus utilisés, il faut pouvoir réduire le couplage d'antenne pour avoir un rapport porteuse sur bruit C/N au maximum de 20dB.

Les premiers tests ont montré qu'il est possible d'obtenir un rapport porteuse sur bruit C/N supérieur à 25dB jusqu'à un couplage de 0dB (c'est-à-dire un signal de rebouclage de même puissance que le signal incident). Cela est cependant valable seulement si le couplage ne varie que très lentement.

Le tableau ci-après donne une idée de l'effet d'une erreur d'estimation du couplage sur le rapport porteuse sur bruit C/N du signal Serr$_{NUM}$, lequel attaque directement le démodulateur.

| C/N | Erreur sur k' (dB) | Erreur sur σ' (°) | Erreur sur τ' (ns) |
|---|---|---|---|
| >10dB | ± 7.0 | ±67 | ± 200 |
| >15dB | ± 3.3 | ±34 | ± 120 |
| >20dB | ± 1.7 | ±21 | ± 70 |
| >25dB | ± 0.9 | ±11 | ± 20 |
| >30dB | ± 0.5 | ±6 | |

**Conditions initiales de fonctionnement :**

Afin de rentrer dans la plage de « capture » des algorithmes de suppression de l'écho, on implante un algorithme de mise en condition initiale de capture.

A l'instant t0 où le signal n'est pas encore établi, il faut mettre $A_{NUM}(t-T)$ à niveau de sorte que la puissance du signal en retour soit inférieure au rapport porteuse sur bruit C/N minimum que nécessite le mode de modulation choisi. Le principe consiste à réduire la puissance du répéteur puis à monter progressivement la puissance tout en agissant sur les paramètres de l'algorithme de suppression de l'écho. Ce niveau est ajusté par l'utilisation d'une unité 75 de Commande Automatique du Gain CAG contrôlée par l'extraction de la valeur du rapport porteuse sur bruit C/N du signal dans le mode sélectionné.

**Résultats de simulation**

Les simulations réalisées permettent de vérifier la convergence et la stabilité des algorithmes en théorie et en présence d'un signal de bruit Gaussien.

On note que N est ici la puissance du signal Ec de l'écho considéré comme du bruit vis-à-vis du signal de porteuse C.

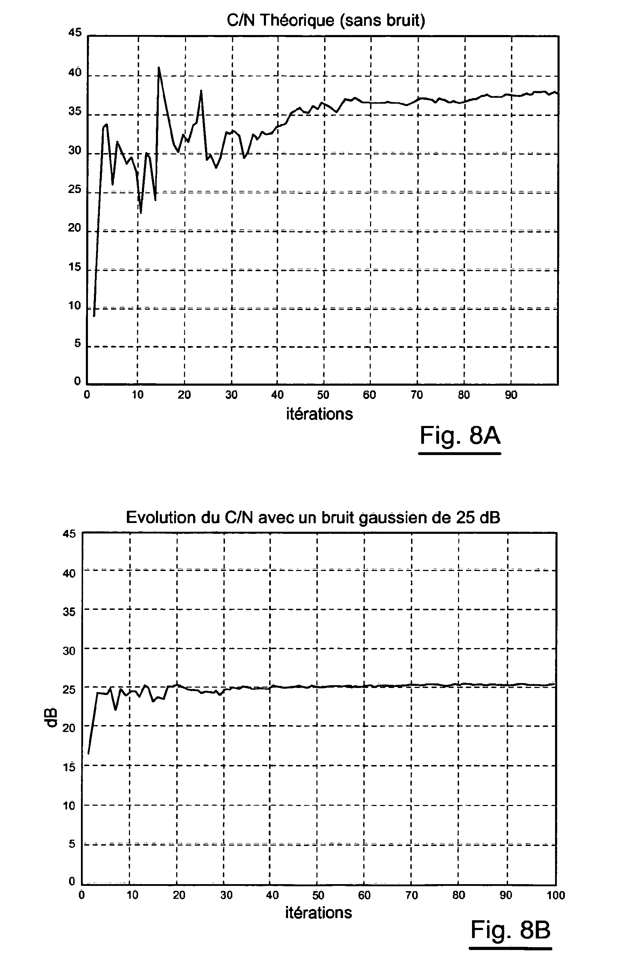

Le graphique de la figure 8A représente l'évolution du rapport porteuse sur bruit C/N théorique, sans bruit, en fonction des itérations, une itération équivaut à un cycle système, avec un déphasage dans la boucle de couplage de 100° et une atténuation de 0 dB. En d'autres termes, la puissance initiale de l'écho de couplage Ec est égale à celle du signal à ré-émettre A.

Les paramètres des signaux sont : 64QAM 1/16.

Le graphique de la figure 8B représente l'évolution du rapport porteuse sur bruit C/N théorique, avec un bruit de 25 dB, en fonction des itérations, une itération équivaut à un cycle système, avec un déphasage dans la boucle de couplage de 100° et une atténuation de 0 dB. En d'autres termes, la puissance initiale de l'écho de couplage Ec est égale à celle du signal à ré-émettre A.

Les paramètres des signaux sont : 64QAM 1/16.

Les simulations montrent qu'après seulement 50 itérations, le système converge vers des performances objectives supérieures à 20dB, idéalement 25dB, correspondant à la puissance du bruit gaussien du canal.

**Revendications**

**1.** Procédé de ré-émission isofréquence d'au moins un signal numérique, comprenant une étape de réception d'un signal source sur une antenne (31) de réception, et une étape de ré-émission dudit signal source par une antenne (32) d'émission, un couplage prenant naissance entre lesdites antennes d'émission et de réception, de sorte qu'au moins un écho de couplage issu de ladite antenne (32) d'émission est reçu avec ledit signal source sur ladite antenne (31) de réception,
**caractérisé en ce qu'**il comprend également les étapes suivantes :

- extraction (33) dudit au moins un écho de couplage;
- traitement dudit au moins un écho de couplage, de façon à générer au moins un signal de correction ;
- soustraction (37) dudit signal de correction audit signal source, générant un signal amélioré;
- régénération (36) dudit signal amélioré par démodulation/modulation, de façon à ré-émettre sur ladite antenne (32) d'émission ledit signal amélioré.

**2.** Procédé de ré-émission isofréquence selon la revendication 1, **caractérisé en ce que** ladite étape (33) d'extraction dudit écho de couplage met en oeuvre une détermination d'au moins un paramètre de déformation dudit signal à ré-émettre sur ladite antenne (32) d'émission, dû audit couplage.

**3.** Procédé de ré-émission isofréquence selon l'une quelconque des revendications 1 et 2, **caractérisé en ce que** ledit signal de correction est obtenu par déformation (35) adaptative, tenant compte dudit au moins un paramètre de déformation, dudit signal à ré-émettre sur ladite antenne d'émission.

**4.** Précédé de ré-émission isofréquence selon l'une quelconque des revendications 2 et 3, **caractérisé en ce que** ledit paramètre de déformation appartient au groupe comprenant :

- un gain ;

- un délai ;
- une phase ;
- un temps de groupe.

5. Procédé de ré-émission isofréquence selon l'une quelconque des revendications 3 et 4, **caractérisé en ce que** ladite déformation (35) adaptative dudit signal à ré-émettre comprend les étapes de :

- application d'un délai fixe correspondant à une durée d'une sous-étape de traitement dudit signal de ladite étape de régénération, audit signal à ré-émettre, délivrant un signal retardé ;
- filtrage adaptatif dudit signal retardé tenant compte desdits paramètres de déformation de gain et de phase, de façon à générer ledit signal de correction.

6. Procédé de ré-émission isofréquence selon la revendication 5, **caractérisé en ce que** ladite déformation adaptative dudit signal à ré-émettre introduit également un délai variable dans ledit signal et ledit filtrage adaptatif met en oeuvre une multiplication complexe de correction desdits paramètres de déformation de gain et de phase.

7. Procédé de ré-émission isofréquence selon l'une quelconque des revendications 1 à 6, **caractérisé en ce que** ladite extraction dudit au moins un écho de couplage met en oeuvre au moins un algorithme numérique appartenant au groupe comprenant :

- un algorithme de corrélation ;
- un algorithme de réduction d'erreur de type LMS.

8. Procédé de ré-émission isofréquence selon l'une quelconque des revendications 1 à 7, **caractérisé en ce qu'**il comprend également une étape (39) d'amplification dudit signal à ré-émettre.

9. Dispositif de ré-émission isofréquence d'au moins un signal numérique comprenant des moyens de réception d'un signal source sur une antenne de réception, et des moyens de ré-émission dudit signal source par une antenne d'émission, un couplage prenant naissance entre lesdites antennes d'émission et de réception, de sorte qu'au moins un écho de couplage issu de ladite antenne d'émission est reçu avec ledit signal source sur ladite antenne de réception,
**caractérisé en ce qu'**il comprend également les moyens suivants :

- des moyens d'extraction d'au moins un écho de couplage dudit signal source;
- des moyens de traitement dudit au moins un écho de couplage, délivrant au moins un signal de correction ;
- des moyens de soustraction dudit signal de correction audit signal source, délivrant un signal amélioré ;
- des moyens de regénération dudit signal amélioré par démodulation/remodulation,

de façon à ré-émettre sur ladite antenne d'émission ledit signal amélioré regénéré.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre des étapes du procédé de réémission isofréquence d'au moins un signal numérique selon l'une quelconque des revendications 1 à 8.

**Claims**

1. Method for single-frequency retransmission of at least one digital signal, comprising a step of receiving a source signal on a receiving antenna (31) and a step of retransmitting the said source signal by means of a transmitting antenna (32), with coupling taking place between the said transmitting and receiving antennae, in such a way that at least one coupling echo sent from the said transmitting antenna (32) is received with the said source signal on the said receiving antenna (31), **characterized in that** it also comprises the following steps:

- extraction (33) of the said at least one coupling echo;
- processing of the said at least one coupling echo so as to generate at least one correction signal;
- subtraction (37) of the said correction signal from the said source signal, generating an improved signal;
- regeneration (36) of the said improved signal by demodulation/modulation, in such a way that the said improved signal is retransmitted on the said transmitting antenna (32).

2. Method for single-frequency retransmission according to Claim 1, **characterized in that** the said step (33) of extracting the said coupling echo makes use of a determination of at least one deformation parameter of the said signal to be retransmitted on the said transmitting antenna (32), the parameter being due to the said coupling.

3. Method for single-frequency retransmission according to either of Claims 1 and 2, **characterized in that** the said correction signal is obtained by adaptive deformation (35), with allowance for the said at least one deformation parameter, of the said signal to be retransmitted on the said transmitting antenna.

4. Method for single-frequency retransmission according to either of Claims 2 and 3, **characterized in that** the said deformation parameter belongs to the group comprising:

   - a gain;
   - a delay;
   - a phase;
   - a group delay.

5. Method for single-frequency retransmission according to either of Claims 3 and 4, **characterized in that** the said adaptive deformation (35) of the said signal to be retransmitted comprises the steps of:

   - applying a fixed delay, corresponding to a duration of a sub-step of processing the said signal of the said regeneration step, to the said signal to be retransmitted, thus delivering a delayed signal;
   - adaptively filtering the said delayed signal with allowance for the said gain and phase deformation parameters, so as to generate the said correction signal.

6. Method for single-frequency retransmission according to Claim 5, **characterized in that** the said adaptive deformation of the said signal to be retransmitted also introduces a variable delay into the said signal and the said adaptive filtering makes use of complex multiplication for correcting the said gain and phase deformation parameters.

7. Method for single-frequency retransmission according to any one of Claims 1 to 6, **characterized in that** the said extraction of the said at least one coupling echo makes use of at least one digital algorithm belonging to the group comprising:

   - a correlation algorithm;
   - an LMS-type error reduction algorithm.

8. Method for single-frequency retransmission according to any one of Claims 1 to 7, **characterized in that** it also comprises a step (39) of amplifying the said signal to be retransmitted.

9. Device for single-frequency retransmission of at least one digital signal, comprising means of receiving a source signal on a receiving antenna and means of retransmitting the said source signal by means of a transmitting antenna, with coupling taking place between the said transmitting and receiving antennae, in such a way that at least one coupling echo sent from the said transmitting antenna is received with the said source signal on the said receiving antenna, **characterized in that** it also comprises the following means:

   - means for extracting at least one coupling echo from the said source signal;
   - means for processing the said at least one coupling echo, delivering at least one correction signal;
   - means for subtracting the said correction signal from the said source signal, delivering an improved signal;
   - means for regenerating the said improved signal by demodulation/remodulation,

   such that the said regenerated improved signal is retransmitted on the said transmission antenna.

10. Computer software product which can be downloaded from a communication network and/or stored on a computer-readable medium and/or executed by a microprocessor, **characterized in that** it comprises program code instructions for the implementation of the steps of the method for single-frequency retransmission of at least one digital signal according to any one of Claims 1 to 8.

**EP 1 744 471 B1**

**Patentansprüche**

1. Verfahren zur Gleichfrequenzwiederholungsübertragung von mindestens einem digitalen Signal, das einen Schritt zum Empfangen eines Quellsignals über eine Empfangsantenne (31) und einen Schritt zur Wiederholungsübertragung dieses Quellsignals über eine Sendeantenne (32) umfasst, wobei zwischen den Sende- und Empfangsantennen eine Kopplung entsteht, so dass mindestens ein Kopplungsecho aus der Sendeantenne (32) mit dem Quellsignal über die Empfangsantenne (31) empfangen wird, **dadurch gekennzeichnet, dass** es auch folgende Schritte umfasst:

   - Extraktion (33) des mindestens einen Kopplungsechos;
   - Verarbeitung des mindestens einen Kopplungsechos, so dass mindestens ein Korrektursignal generiert wird;
   - Subtraktion (37) des Korrektursignals vom Quellsignal, wobei ein verbessertes Signal generiert wird;
   - Regeneration (36) des verbesserten Signals durch Demodulation/Modulation, so dass das verbesserte Signal erneut über die Sendeantenne (32) übertragen wird.

2. Verfahren zur Gleichfrequenzwiederholungsübertragung nach Anspruch 1, **dadurch gekennzeichnet, dass** beim Schritt (33) der Extraktion des Kopplungsechos mindestens ein Verzerrungsparameter des erneut über die Sendeantenne (32) zu übertragenden Signals bestimmt wird, der durch diese Kopplung bedingt ist.

3. Verfahren zur Gleichfrequenzwiederholungsübertragung nach einem der Ansprüche 1 und 2, **dadurch gekennzeichnet, dass** das Korrektursignal durch adaptive Verzerrung (35) erhalten wird, wobei mindestens ein Verzerrungsparameter des erneut über die Sendeantenne zu übertragenden Signals berücksichtigt wird.

4. Verfahren zur Gleichfrequenzwiederholungsübertragung nach einem der Ansprüche 2 und 3, **dadurch gekennzeichnet, dass** der Verzerrungsparameter der Gruppe angehört, die umfasst:

   - einen Gewinn;
   - eine Zeit;
   - eine Phase;
   - eine Gruppenlaufzeit.

5. Verfahren zur Gleichfrequenzwiederholungsübertragung nach einem der Ansprüche 3 und 4, **dadurch gekennzeichnet, dass** die adaptive Verzerrung (35) des erneut zu übertragenden Signals folgende Schritte umfasst:

   - Anwendung einer festen Zeit, die einer Dauer eines Teilschritts zur Verarbeitung des Signals des Regenerationsschritts entspricht, auf das erneut zu übertragende Signal, die ein verzögertes Signal ergibt;
   - adaptive Filterung des verzögerten Signals unter Berücksichtigung der Verzerrungsparameter von Gewinn und Phase, so dass das Korrektursignal generiert wird.

6. Verfahren zur Gleichfrequenzwiederholungsübertragung nach Anspruch 5, **dadurch gekennzeichnet, dass** die adaptive Verzerrung des erneut zu übertragenden Signals auch eine veränderliche Zeit in das Signal einfügt und dass die adaptive Filterung eine komplexe Multiplikation zur Korrektur der Verzerrungsparameter von Gewinn und Phase einsetzt.

7. Verfahren zur Gleichfrequenzwiederholungsübertragung nach einem der Ansprüche 1 bis 6, **dadurch gekennzeichnet, dass** bei der Extraktion des mindestens einen Kopplungsechos mindestens ein numerischer Algorithmus eingesetzt wird, der der Gruppe angehört, die umfasst:

   - einen Korrelationsalgorithmus;
   - einen Least-Mean-Square-Algorithmus (LMS-Algorithmus).

8. Verfahren zur Gleichfrequenzwiederholungsübertragung nach einem der Ansprüche 1 bis 7, **dadurch gekennzeichnet, dass** es auch einen Schritt (39) zur Verstärkung des erneut zu übertragenden Signals umfasst.

9. Vorrichtung zur Gleichfrequenzwiederholungsübertragung von mindestens einem digitalen Signal, die Mittel zum Empfangen eines Quellsignals über eine Empfangsantenne und Mittel zur Wiederholungsübertragung dieses Quellsignals über eine Sendeantenne umfasst, wobei zwischen den Sende- und Empfangsantennen eine Kopplung entsteht, so dass mindestens ein Kopplungsecho aus der Sendeantenne mit dem Quellsignal über die Empfangsantenne empfangen wird, **dadurch gekennzeichnet, dass** sie auch folgende Mittel umfasst:

- Mittel zur Extraktion von mindestens einem Kopplungsechos aus dem Quellsignal;
- Mittel zur Verarbeitung des mindestens einen Kopplungsechos, die mindestens ein Korrektursignal ergibt;
- Mittel zur Subtraktion des Korrektursignals vom Quellsignal, die ein verbessertes Signal ergibt;
- Mittel zur Regeneration des verbesserten Signals durch Demodulation/Modulation,

so dass über die Sendeantenne das verbesserte Signal erneut übertragen wird.

10. Computerprogramm, das über ein Kommunikationsnetzwerk heruntergeladen werden kann und/oder auf einem computerlesbaren Medium gespeichert ist und/oder von einem Mikroprozessor ausgeführt werden kann, **dadurch gekennzeichnet, dass** es Programmcodeanweisungen zur Durchführung der Schritte des Verfahrens zur Gleichfrequenzwiederholungsübertragung von mindestens einem digitalen Signal nach einem der Ansprüche 1 bis 8 umfasst.

Fig. 1

Fig. 2

Fig. 3

Fig. 4A

Fig. 4B

EP 1 744 471 B1

Fig. 5

EP 1 744 471 B1

Extraction écho couplage

$R_{NUM}$

$E_{cestNUM}$

$A_{NUM}$

33

$S_{RF}$

Déformation adaptative

35

31

$R_{RF}$

$S_{errNUM}$

$A_{RF}$

32

RF/IF
+ CAN

Regénérateur numérique

CNA +
IF/RF

$A_{RF}$

$E_{CRF}$

34

Fig. 6A

36

$A_{NUM}$

38

A'

39

Extraction écho couplage

$E_{cestNUM}$

33

Déformation adaptative

$S_{RF}$

35

31

$R_{RF}$

$R_{NUM}$

$A_{RF}$

32

RF/IF
+ CAN

Regénérateur numérique

CNA +
IF/RF

$A_{RF}$

$E_{CRF}$

34

$S_{errNUM}$

Fig. 6B

36

$A_{NUM}$

38

A'

39

Fig. 7

C/N Théorique (sans bruit)

Fig. 8A

Evolution du C/N avec un bruit gaussien de 25 dB

Fig. 8B

**RÉFÉRENCES CITÉES DANS LA DESCRIPTION**

**Documents brevets cités dans la description**

- EP 1261148 B1